# EUROPÄISCHE PATENTSCHRIFT

(11) **EP 2 257 467 B1**
(45) Veröffentlichungstag und Bekanntmachung des Hinweises auf die Patenterteilung: **23.11.2011**
(21) Anmeldenummer: 09720770.8
(22) Anmeldetag: 16.02.2009
(51) Int. Cl.: B64C 1/12, B64C 1/06

(54) **QUERSTOSSVERBINDUNG ZWISCHEN ZWEI RUMPSEKTIONEN SOWIE VERFAHREN ZUR HERSTELLUNG DERSELBEN**
TRANSVERSE BUTT CONNECTION BETWEEN TWO FUSELAGE SECTIONS AND METHOD THEREFORE
ABOUTAGE TRANSVERSAL ENTRE DEUX SECTIONS DE FUSELAGE ET LE PROCEDE CORRESPONDANT

(30) Priorität: 10.03.2008 DE 102008013365
(43) Veröffentlichungstag der Anmeldung: 08.12.2010
(73) Patentinhaber: Airbus Operations GmbH, 21129 Hamburg (DE)
(72) Erfinder: TACKE, Stefan, 21614 Buxtehude (DE); MISCHEREIT, Stephan, 21423 Winsen (DE); REYE, Volker, 22609 Hamburg (DE)
(74) Vertreter: Habenicht, Wieland
(86) Internationale Anmeldenummer: PCT/EP2009/051776
(87) Internationale Veröffentlichungsnummer: WO 2009/112327

(56) Entgegenhaltungen:
- EP-A- 1 081 043
- US-A- 4 892 435
- US-A1- 2006 060 705

## Beschreibung

Die Erfindung betrifft eine Querstoßverbindung zwischen zwei Rumpfsektionen, insbesondere zur Schaffung einer Rumpfzelle für ein Flugzeug, mit einer Vielzahl von innenseitig auf einer Außenhaut gleichmäßig parallel zueinander beabstandet verteilt angeordneten Stringern.

Darüber hinaus betrifft die Erfindung ein Verfahren zur Herstellung einer derartigen Querstoßverbindung zwischen zwei Rumpfsektionen.

Im modernen Flugzeugbau findet verbreitet die so genannte Sektionsbauweise Anwendung. Hierbei werden anderweitig vorgefertigte, insbesondere tonnenförmige Rumpfsektionen zur Schaffung einer kompletten Flugzeugrumpfzelle aneinander gereiht und verbunden. Die Rumpfsektionen können in der klassischen Aluminiumbauweise mit hochfesten Aluminiumlegierungsmaterialien hergestellt werden. Darüber hinaus werden Rumpfsektionen zunehmend unter Einsatz von Faserverbundwerkstoffen, beispielsweise kohlefaserverstärkten Epoxidharzen gefertigt. Hierbei ist zwischen der so genannten "Hybridbauweise", bei der lediglich einzelne Komponenten der Rumpfsektion mit Faserverbundwerkstoffen gebildet sind, sowie der reinen Faserverbundbauweise, bei der alle wesentlichen strukturellen Komponenten der Rumpfzelle mit faserverstärkten Kunststoffmaterialien gebildet sind, zu unterscheiden.

Ein großes Problem stellt unabhängig vom jeweils eingesetzten Material der Toleranzausgleich zwischen den zusammenzufügenden Rumpfsektionen dar. Insbesondere die Querschnittsabmessungen zwischen den zu fügenden Rumpfsektionen unterliegen fertigungsbedingten Toleranzabweichungen, die nur mit einem unverhältnismäßig hohen Aufwand soweit vermindert werden könnten, dass ein problemloses Zusammenfügen ohne Toleranzausgleichsmaßnahmen möglich wäre. Besonders große Toleranzabweichungen stellen sich insbesondere bei der integralen Faserverbundbauteilfertigung ein, bei der Rumpfsektionen für große Passagierflugzeuge im Wickelverfahren zum Beispiel durch das Ablegen von mit einem aushärtbaren Kunststoffmaterial imprägnierten Verstärkungsfasersträngen ("Prepreg"-Material) hergestellt werden.

Bislang werden die Toleranzen zwischen den zusammenzufügenden Rumpfsektionen durch flüssige, das heißt aushärtbare und/oder feste Zulagen (so genannte "Shims") kompensiert, da ein Zusammenbau der Rumpfsektionen unter Spannung aus statischen Gründen zu vermeiden ist Dokument EP1081043, das als nächstliegender Stand der Technik betrachtet wird, zeigt eine solche Verbindung. Der Einsatz der Zulagen bedingt grundsätzlich ein Mehrgewicht, vermindert zudem die erreichbaren Festigkeiten der resultierenden Querstoßverbindung und erhöht in erheblichem Maße den Montageaufwand. Bei der Montage werden die Querschnittsgeometrien der Rumpfsektionen zunächst präzise eingemessen und anhand der Messdaten erfolgt eine Ausrichtung der Rumpfsektionen zueinander. Anschließend werden die Zulagen in den sich zwischen den Rumpfsektionen einstellenden Spalt eingebracht und gegebenenfalls ausgehärtet. Im Fall der Verwendung von festen Zulagen müssen eine Vielzahl von Zulagen mit unterschiedlichen geometrischen Abmessungen vorgehalten werden, wodurch der Lager- und Montageaufwand zunimmt.

Zum Abschluss des Verbindungsprozesses oder gegebenenfalls auch vor dem Abschluss des Aushärtevorgangs, erfolgt die endgültige Verbindung der Rumpfsektionen unter Verwendung herkömmlicher Verbindungselemente. Als Verbindungselemente kommen zum Beispiel Laschen, Kupplungen, Nieten oder Schrauben zum Einsatz. Alternativ ist auch eine zumindest bereichsweise Schweiß- oder Klebeverbindung möglich.

Aufgabe der Erfindung ist es, eine Querstoßverbindung zwischen zwei Rumpfsektionen anzugeben, die einen universellen Toleranzausgleich mit standardisierten Ausgleichsmitteln innerhalb eines vorgegebenen Toleranzbandes zwischen zwei zusammenzufügenden Rumpfsektionen erlaubt.

Diese Aufgabe wird durch eine Querstoßverbindung mit den Merkmalen des Patentanspruchs 1 sowie ein Verfahren zur Herstellung einer Querstoßverbindung nach Patentanspruch 10 gelöst. Bevorzugte Ausführungsformen sind Gegenstand der jeweiligen Unteransprüche.

Dadurch, dass beide Endbereiche der Rumpfsektionen innenseitig entgegengesetzt geneigte Hautkeilflächen aufweisen und die Verbindung der beiden Endbereiche durch eine umlaufende Querstoßlasche erfolgt, die mit zwei entgegengesetzt geneigten Querstoßlaschenkeilflächen im Bereich einer Unterseite versehen ist, wobei zwischen jeweils einer Querstoßlaschenkeilfläche ein Keil zum Toleranzausgleich zwischen den Rumpfsektionen einschiebbar ist, kann innerhalb eines vorgegebenen Toleranzbandes, insbesondere im Hinblick auf voneinander abweichende Querschnittsgeometrien der beiden Rumpfsektionen, ein Ausgleich zwischen zwei zusammenzufügenden Rumpfsektionen ohne das Vorhalten von zusätzlichen Komponenten erfolgen.

Der Toleranzausgleich erfolgt auf einfache Art und Weise durch das unterschiedlich weite Einschieben von standardisierten Keilen zwischen die Querstoßlasche und die Endbereiche der Rumpfsektionen. Zu diesem Zweck verfügen die Endbereiche der Rumpfsektionen über geringfügig entgegengesetzt geneigte Hautkeilflächen und die Querstoßlasche weist im Bereich einer Unterseite gleichfalls entgegengesetzt geneigte Querstoßlaschenkeilflächen auf. Zwischen diese Keilflächen werden die Keile in horizontaler Richtung, das heißt parallelzu einer Längsachse der Sektion zum Vollzug des Toleranzausgleichs eingeschoben. Mittels der erfindungsgemäßen Querstoßverbindung ist zwischen den Rumpfsektionen in radialer Richtung beispielsweise ein stufenloser Toleranzausgleich von bis zu ± 2 mm und in axialer Richtung eine Kompensation in einer Größenordnung von bis zu ± 4 mm erreichbar. Nach einer vorteilhaften Ausgestaltung ist ein Neigungswinkel der Hautkeilflächen jeweils gleich einem Neigungswinkel der Querstoßlaschenkeilflächen, wobei Neigungswinkel der Keilflächen jedes Keils jeweils gleich dem Neigungswinkel der Hautkeilflächen und dem Neigungswinkel der Querstoßlaschenkeilflächen sind.

Infolge der im Wesentlichen gleichen Neigungswinkel der Keile sowie der hiermit in Verbindung stehenden Keilflächen der Außenhäute der Rumpfsektionen sowie der Unterseite der Querstoßlasche ist eine gleichmäßige Positionierung aller Komponenten in Abhängigkeit von der horizontalen Stellung der Keile möglich. Der bevorzugt gleich gewählte Neigungswinkel aller Keilflächen beträgt bis zu 5°, vorzugsweise jedoch weniger als 2°. Infolge der kleinen Winkel wird die Neigung der Keile, sich in axialer Richtung durch die Einwirkung von hohen radialen Kräften zu bewegen, verringert.

In einer weiteren vorteilhaften Ausgestaltung sind die Hautkeilflächen integrale Bestandteile der Endbereiche der Rumpfsektionen.

Infolge dieser Ausgestaltung wird die Anzahl der Einzelteile der Querstoßverbindung verringert. Die innenseitigen, umlaufenden Hautkeilflächen in den Endbereichen der Rumpfsektionen können in Abhängigkeit von dem für die Rumpfsektionen eingesetzten Werkstoff auf unterschiedliche Weise ausgebildet werden.

Im Fall der klassischen Aluminiumbauweise der Rumpfsektion kann die keilförmige Aufdickung beispielsweise durch ein Abfräsen gebildet werden. Alternativ ist es auch möglich, im Endbereich der Rumpfsektionen einen derartigen umlaufenden ringförmigen Keilabschnitt durch Schweißen anzufügen. Als Schweißverfahren kommen hierbei insbesondere das Reibrührschweißverfahren sowie das Laserschweißverfahren in Betracht, die mechanisch hochbelastbare Nähte ergeben, deren Festigkeit sich nicht signifikant von der Belastbarkeit der Ausgangsmaterialien unterscheidet.

Für den Fall, dass die Außenhaut der Rumpfsektion beispielsweise mit einem Faserverbundmaterial durch Wickeln gefertigt wird, kann die geneigte Hautkeilfläche im

Endbereich der Rumpfsektionen durch das Aufbringen einer bereichsweise höheren und sich dann stetig verringernden Anzahl von Verstärkungsfaserlagen gebildet werden.

Nach Maßgabe einer weiteren Fortbildung ist vorgesehen, dass die Querstoßlasche eine ringförmige Gestalt aufweist und mit mindestens zwei umlaufenden Querstoßlaschensegmenten, insbesondere mit mindestens sechs aneinander anschließenden Querstoßlaschensegmenten, gebildet ist.

Der segmentierte Aufbau der im Wesentlichen ringförmigen Querstoßlasche erlaubt eine einfachere Herstellung und Montage der Querstoßlasche. Die Verbindung der Querstoßlaschensegmente untereinander erfolgt vorzugsweise auf Stoß unter Verwendung von Verbindungslaschen. Die Verbindung zwischen den Querstoßlaschensegmenten und den Verbindungslaschen erfolgt durch konventionelle Verbindungselemente, wie zum Beispiel Nieten oder Schrauben. Alternativ kann auch eine Klebe- oder Schweißverbindung erfolgen.

Eine Weiterentwicklung der Querstoßverbindung sieht vor, dass die mindestens zwei Querstoßlaschensegmente ein Spantprofil aufweisen.

Vorzugsweise ist das Spantprofil integraler Bestandteil der Querstoßlasche. Um das Verkippen des Spantprofils in Bezug auf die Querstoßlasche zu verhindern, kann seitlich am Spantprofil eines jeden Querstoßlaschensegments mindestens ein optionaler Stützwinkel, insbesondere ein so genannter "Clip" vorgesehen sein. Die Stützwinkel bzw. die "Clipse" können gleichfalls als integrale Bestandteile des Querstoßlaschensegments ausgestaltet sein. Dies wird in der Regel dann der Fall sein, wenn eine Materialgleichartigkeit zwischen dem Querstoßlaschensegment, dem Spantprofil und dem Klipp besteht, also beispielsweise bei einer durchgängigen Verwendung von Aluminiumlegierungen oder CFK-Materialien.

Für den Fall einer nichtintegralen Ausgestaltung des Spantprofils und/oder der Stützwinkel mit der Querstoßlasche erfolgt deren Verbindung untereinander gleichfalls durch konventionelle Verbindungselemente. Alternativ kann eine Verbindung auch durch Schweißen oder Kleben erfolgen.

Alternativ kann die Außenhaut der zu verbindenden Rumpfsektionen und/oder die Querstoßlasche bzw. Querstoßlaschensegmente mit Faser-Metalllaminaten, wie zum Beispiel GLARE^{®} oder mit Titan-CFK-Laminaten gebildet sein.

Das erfindungsgemäße Verfahren zur Herstellung einer Querstoßverbindung zwischen zwei Rumpfsektionen mit einer Vielzahl von innenseitig auf einer Außenhaut gleichmäßig parallel zueinander beabstandet verteilt angeordneten Stringern weist die folgenden Schritte auf:
a) Zusammenfügen einer umlaufenden Querstoßlasche durch das Aneinanderreihen von mindestens zwei gekrümmten Querstoßlaschensegmenten,
b) Ausrichten einer ersten Rumpfsektion an der Querstoßlasche,
c) Einschieben von Keilen zum Toleranzausgleich,
d) Verbinden eines Endbereichs der ersten Rumpfsektion mit der Querstoßlasche,
e) Ausrichten einer zweiten Rumpfsektion an der Querstoßlasche,
f) Einschieben von Keilen zum Toleranzausgleich,
g) Verbinden eines Endbereichs der zweiten anzufügenden Rumpfsektion mit der Querstoßlasche.

Im Gegensatz zu der bekannten Vorgehensweise beim Zusammenfügen von Rumpfsektionen stellt bei dem erfindungsgemäßen Verfahren die Querstoßlasche die eigentliche Bezugsgröße dar, an die die gegebenenfalls abweichenden Querschnittsgeometrien der Rumpfsektionen mittels der Keile angeglichen werden. Im Verfahrensschritt a) erfolgt zunächst die Schaffung der umlaufenden, ringförmigen Querstoßlasche durch die Verbindung von mindestens zwei Querstoßlaschensegmenten. Anschließend wird im Schritt b) die erste Rumpfsektion in Bezug auf die Querstoßlasche (Referenz) ausgerichtet. Hierdurch wird erreicht, dass ein aufgrund von etwaigen Toleranzabweichungen bestehender Spalt über den Umfang betrachtet eine möglichst gleichbleibende Breite aufweist. Nach der erfolgten Ausrichtung erfolgen im Schritt c) das Einschieben der Keile und die anschließende Verbindung zwischen dem Endbereich der ersten Rumpfsektion und der Querstoßlasche mittels konventioneller Verbindungselemente im Schritt d). Im Fall der anzufügenden zweiten Rumpfsektion wird in den Schritten e) bis g) des Verfahrens genauso verfahren.

Eine Weiterentwicklung des Verfahrens sieht vor, dass die erste Rumpfsektion und die zweite Rumpfsektion beim Ausrichten in Bezug auf die Querstoßlasche vermittelt werden.

Infolge dieser Vorgehensweise wird über den Umfang der zu verbindenden Rumpfsektionen ein gleichmäßiges Spaltmaß erreicht, so dass jeweils benachbarte Keile für den Toleranzausgleich in etwa gleich weit zwischen die Querstoßlasche und die geneigten Endbereiche der Rumpfsektionen eingeschoben werden und sich ein hoher Symmetriegrad der gesamten Toleranzausgleichsmaßnahme einstellt.

Weitere vorteilhafte Ausgestaltungen der Querstoßverbindung und des Verfahrens ergeben sich aus der folgenden Beschreibung von bevorzugten Ausführungsbeispielen, bei der auf die beigefügte Zeichnung Bezug genommen wird.
Fig. 1 zeigt eine Prinzipdarstellung eines Ausschnitts aus der Querstoßverbindung.
Fig. 2 zeigt eine schematische Darstellung des Funktionsprinzips zum Toleranzausgleich mit verschiebbaren Keilen in der Querstoßverbindung.
Fig. 3 zeigt einen Ausschnitt aus einer Ausführungsvariante der Querstoßverbindung.
Fig. 4 zeigt ein technisches Ausführungsbeispiel der Querstoßverbindung.

In der Zeichnung weisen dieselben konstruktiven Elemente jeweils die gleiche Bezugsziffer auf.

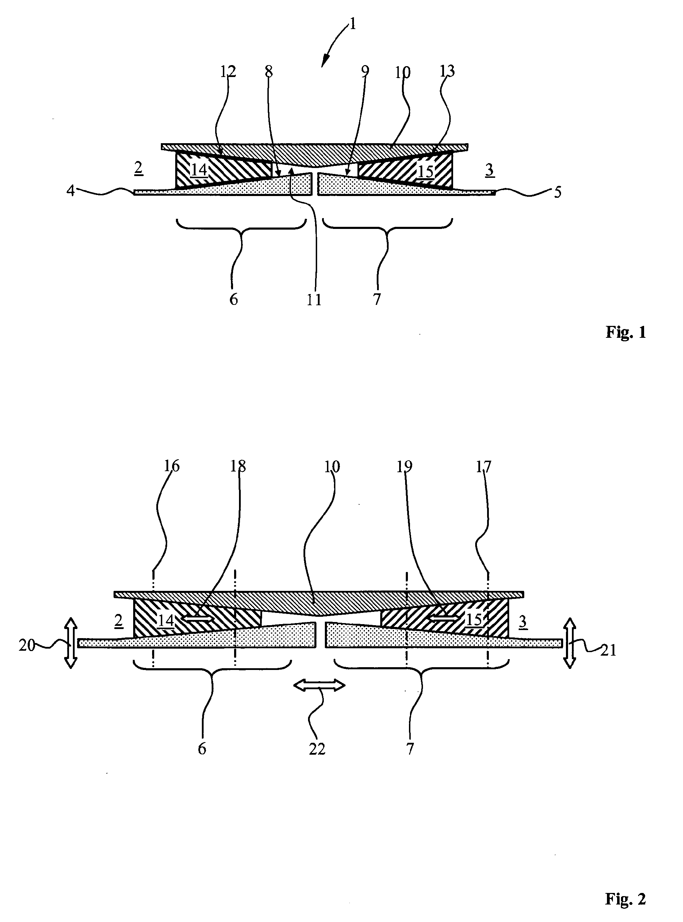

Die Fig. 1 zeigt eine Prinzipdarstellung der erfindungsgemäß ausgestalteten Querstoßverbindung.

Eine Querstoßverbindung 1 ist zwischen einer ersten und zweiten Rumpfsektion 2, 3 gebildet, die jeweils von einer Außenhaut 4, 5 umschlossen sind. Endbereiche 6, 7 der Rumpfsektionen weisen jeweils eine entgegengesetzt geneigte Hautkeilfläche 8, 9 auf. Die Verbindung der beiden Rumpfsektionen 2, 3 erfolgt mittels einer ringförmigen Querstoßlasche 10. Die Querstoßlasche 10 verfügt im Bereich einer Unterseite 11 über zwei entgegengesetzt geneigte Querstoßlaschenkeilflächen 12, 13, die mittig aneinander grenzen. Zwischen der Querstoßlasche 10 und den Endbereichen 6, 7 der Rumpfsektionen ist jeweils ein Keil 14, 15 eingeschoben. Durch die Keile 14, 15 erfolgt ein Toleranzausgleich zwischen den Rumpfsektionen 2, 3 in radialer und/oder axialer Richtung. Die Neigungswinkel der Keile 14, 15 sowie der Querstoßlaschenkeilflächen 12, 13 und der Hautkeilflächen 8, 9 sind bevorzugt gleich groß gewählt und erreichen Winkelwerte von 2°, um die auf die Keile 14, 15 wirkenden Horizontalkräfte sowie die Lochleibungskräfte der eingesetzten Verbindungselemente zu begrenzen.

Sowohl die Querstoßlasche 10, als auch die Keile 14, 15 und die Außenhäute 4, 5 können mit einem Aluminiumlegierungsmaterial und/oder mit einem Faserverbundmaterial wie beispielsweise einem kohlefaserverstärkten Epoxidharzmaterial oder einem faserverstärkten thermoplastischen Material gebildet sein. Alternativ können die Keile 14, 15 und die Querstoßlasche 10 mit einer Titan- oder Edelstahllegierung gebildet sein, während die Außenhäute 4, 5 in dieser Konstellation mit einem Faserverbundmaterial wie beispielsweise mit einem kohlefaserverstärkten Epoxidharz oder mit einem kohlefaserarmierten Thermoplast (PEEK) hergestellt sind.

Sind beispielsweise die Außenhäute 4, 5 der beiden Rumpfsektionen 2, 3 mit einem hergebrachten Aluminiumlegierungsmaterial gebildet, können die geneigten Endbereiche 6, 7 beispielsweise durch Fräsen oder Funkenerosionsverfahren hergestellt werden. Alternativ ist es auch möglich, einen Ringkeil mit einer entsprechend geneigten, keilförmigen Querschnittsgeometrie an die Außenhäute 4, 5 zur Bildung der geneigten Endbereiche 6, 7 anzuschweißen und/oder anzukleben. In diesem Zusammenhang sind insbesondere Reibrührschweißverfahren oder Laserschweißverfahren geeignet.

Sind die Außenhäute 4, 5 hingegen zum Beispiel mit einem Faserverbundmaterial im Wickelverfahren auf einem Dorn ("male"-Werkzeug) hergestellt worden, so können die geneigten Endbereiche 6, 7 durch die Ablage einer zur Außenkante der Rumpfsektionen 2, 3 hin sich stetig vergrößernden Anzahl von Lagen auf einfache Weise geschaffen werden. Die Querstoßlasche 10 kann mit einem Faserverbundmaterial, einem Aluminiumlegierungsmaterial, einer Titanlegierung, einer Edelstahllegierung oder einer Kombination hiervon gebildet sein.

Die Fig. 2 zeigt schematisch die Richtungen im Raum, in denen ein Toleranzausgleich durch horizontales Verschieben der Keile 14, 15 möglich ist. Zwischen der Querstoßlasche 10 und den geneigten Endbereichen 6, 7 der Rumpfsektionen 2, 3 sind die beiden Keile 14, 15 eingeschoben.

Die Verbindung aller genannten Komponenten erfolgt durch die mit strichpunktierten Linien symbolisch dargestellten konventionellen Verbindungselemente, von denen lediglich zwei äußere Verbindungselemente 16, 17 mit einer Bezugsziffer versehen wurden. Die Verbindungselemente 16, 17 können beispielsweise mit Nieten, Schrauben oder dergleichen gebildet sein. Alternativ können die Querstoßlasche 10, die Keile 14, 15 sowie die Endbereiche 6, 7 der beiden Rumpfsektionen 2, 3 auch durch beliebige Schweiß- und/oder Klebeverbindungen zusammengefügt werden. Jeder Keil 14, 15 verfügt über zwei entgegengesetzt geneigte Keilflächen.

Durch unterschiedlich weites Verschieben der beiden Keile 14, 15 in Richtung der horizontalen Pfeile 18, 19 lässt sich zum einen ein radialer Toleranzausgleich zwischen den Rumpfsektionen 2, 3 in Richtung der beiden vertikalen Pfeile 20, 21 erreichen. Gleichzeitig kann durch das Verschieben der Keile 14, 15 in Richtung der Pfeile 18, 19 ein Toleranzausgleich in axialer Richtung zwischen den Rumpfsektionen 2, 3 in Richtung des horizontalen Pfeils 22 bewirkt werden.

Bei einer Materialstärke der Querstoßlasche 10 von beispielsweise 10 mm einschließlich der vier Keilflächen der Keile 14, 15 und einem gleichen Neigungswinkel aller geneigten Flächen von 2° lässt sich in axialer Richtung zwischen den Rumpfsektionen 2, 3 ein Toleranzausgleich von ± 4 mm erreichen, während gleichzeitig ein Toleranzausgleich in radialer Richtung von bis zu ± 2 mm erzielbar ist, wodurch eine vereinfachte und zugleich schnellere Montage der Rumpfsektionen möglich wird.

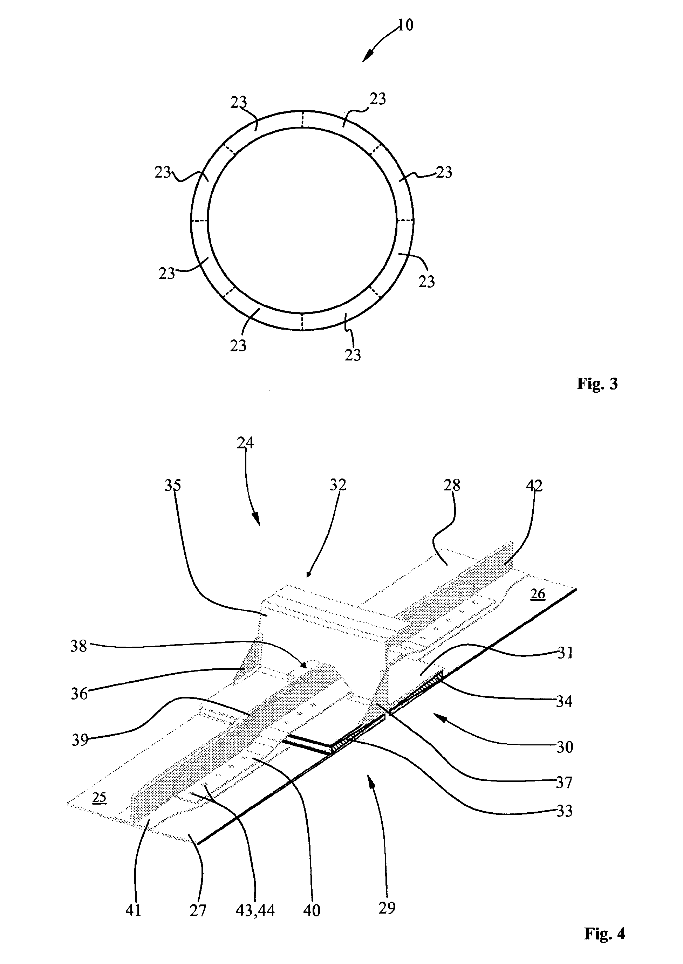

Die Fig. 3 illustriert in einer Draufsicht exemplarisch den Aufbau der ringförmigen Querstoßlasche mit insgesamt acht Querstoßlaschensegmenten zur Verbindung von Rumpfsektionen mit einer kreisförmigen Querschnittgeometrie.

Die Querstoßlasche 10 ist im Ausführungsbeispiel der Fig. 3 mit insgesamt acht aneinander gereihten und untereinander fest verbundenen, gekrümmten kreissegmentförmigen Querstoßlaschensegmenten 23 gebildet. Im Allgemeinen wird die Querstoßlasche 10 mit mindestens zwei, vorzugsweise jedoch sechs Querstoßlaschensegmenten 23 gebildet. Die in der Fig. 3 gezeigte Unterteilung der Querstoßlasche in insgesamt acht Querstoßlaschensegmente 23 (d.h. 45°-Teilung) dient lediglich einer zeichnerisch vereinfachten, schematischen Darstellung. Im Flugzeugbau orientiert sich die reale Teilung einer Rumpfsektion in Längsrichtung (Schalen mit Längsnähten) vorzugsweise an den unterschiedlichen Krümmungsradien einer gewählten Querschnittsgeometrie, wobei übliche Rumpfsektionen mindestens zwei unterschiedliche Radien aufweisen.

Die Verbindung der Querstoßlaschensegmente 23 erfolgt jeweils im Bereich der gestrichelten Linien an deren Enden durch Stoßverbindungen, die geschraubt, genietet, geklebt oder auch geschweißt sein können. Zur Erhöhung der Festigkeit kann es erforderlich sein, einseitig oder beidseitig an den Querstoßlaschensegmenten 23 jeweils nicht dargestellte Verbindungslaschen zur Überbrückung der Stoßbereiche vorzusehen. Alternativ können die Enden der Querstoßlaschensegmente 23 auch überlappend verbunden sein.

Querstoßlaschen 10 zur Verbindung von Rumpfsektionen, die eine von der in der Fig. 3 gezeigten reinen Kreisgeometrie abweichende Querschnittsgeometrie aufweisen, verfügen über einen hieran örtlich angepassten Krümmungsverlauf, der von der Form eines idealen Kreissegmentes abweicht.

Die Fig. 4 zeigt ein technisches Ausführungsbeispiel einer Querstoßverbindung 24. Die Querstoßverbindung 24 ist zwischen zwei Rumpfsektionen 25, 26, die jeweils mit einer Außenhaut 27, 28 beplankt sind, gebildet.

Beide Endbereiche 29, 30 weisen entsprechend der Darstellung der Fig. 1, 2 keilförmige Aufdickungen auf, deren Neigungen einander entgegengerichtet sind. Eine Querstoßlasche 31 ist mit einer Vielzahl von nicht dargestellten Querstoßlaschensegmenten gebildet, deren geometrische Form jeweils einem Vielfachen des dargestellten (Teil-) Abschnittes eines Querstoßlaschensegments 32 entspricht. Die geometrische Gestalt einer nicht bezeichneten Unterseite des Querstoßlaschensegments 32 entspricht der Unterseite 11 der Querstoßlasche 10 in der Fig. 1 mit zwei entgegengesetzt geneigten Querstoßlaschenkeilflächen. Zwischen dem Querstoßlaschensegment 32 und den Endbereichen 29, 30 der Rumpfsektionen 25, 26 sind wiederum zwei Keile 33, 34 eingeschoben, um den gewünschten Toleranzausgleich in radialer und/oder axialer Richtung der Rumpfsektionen 25, 26 zu bewirken.

In der Darstellung der Fig. 4 verfügt das Querstoßlaschensegment 32 bzw. die Querstoßlasche 31 über ein integral ausgeführtes Ringspantprofil 35, das mittels zwei gleichfalls integral ausgebildeter Stützwinkel 36, 37 (so genannte "Clipse") gegen das Verkippen gegenüber den beiden unterseitigen, nicht bezeichneten Flanschen der Querstoßlasche 31 gesichert ist. Sowohl das Spantprofil 35 als auch die Stützwinkel 36, 37 können integral oder als separate Komponenten zur Querstoßlasche 31 ausgestaltet sein. Im Fall einer separaten Ausbildung ist es erforderlich, zur Anbindung des Spantprofils 35 und/oder der Stützwinkel 36, 37 an die Querstoßlasche 31 zusätzliche, gewichtserhöhende Verbindungselemente und/oder Schweiß- bzw. Klebeverbindungen vorzusehen.

Das Querstoßlaschensegment 32 verfügt über eine trapezförmige Ausnehmung 38 bzw. eine Durchbrechung, durch die zwei Stringerkupplungen 39, 40 verlaufen, die zur Verbindung der Stringer 41, 42 dienen. Die Außenhaut 27, 28, das Querstoßlaschensegment 32 sowie die Stringerkupplungen 39, 40 sind mit einer Vielzahl von Verbindungselementen, von denen zwei vordere Verbindungselemente repräsentativ für die übrigen mit den Bezugsziffern 43, 44 versehen wurden, fest zusammengefügt. Als Verbindungselemente kommen beispielsweise Schrauben, Nieten oder dergleichen in Betracht. Weiterhin können alle genannten Komponenten alternativ auch zumindest bereichsweise verklebt und/oder verschweißt werden.

Die beiden Keile 33, 34 können einen der lokalen Krümmung des Querstoßlaschensegments 32 jeweils entsprechenden Krümmungsverlauf aufweisen. Alternativ kann eine hinreichend feine Segmentierung der Keile 33, 34 vorgenommen werden, das heißt zur Abdeckung des Bereichs eines jeden Querstoßlaschensegments sind mehrere Keile vorzusehen, die in sich aber gerade ausgebildet sind und nebeneinander positioniert werden.

Die Außenhäute 27, 28, das Querstoßlaschensegment 32 bzw. die Querstoßlasche 31, die Stringer 41, 42 sowie die Stringerkupplungen 39, 40 können mit Aluminiumlegierungen, Titanlegierungen, Edelstahllegierungen und/oder mit Faserverbundwerkstoffen, wie beispielsweise kohlefaserverstärkten Epoxidharzen und/oder Thermoplasten wie zum Beispiel "Polyetheretherketon" (PEEK) gebildet sein. Gegebenenfalls können die Stringerkupplungen 39, 40 als gleichfalls integrale Bestandteile des Querstoßlaschensegments 32 ausgestaltet sein.

Zur Durchführung des erfindungsgemäßen Verfahrens wird im Verfahrensschritt a) zunächst eine vollständige Querstoßlasche 31 aus mindestens zwei Laschensegmenten 32 als Referenz fest zusammengefügt, beispielsweise durch Vernieten oder Verschweißen. Anschließend wird in den Verfahrensschritten b) und c) eine erste Rumpfsektion 25 in Bezug auf die so erstellte ringförmige Querstoßlasche 31 ausgerichtet, das heißt insbesondere vermittelt, wobei eine Vielzahl von Keilen 33, 34 zwischen die Querstoßlaschensegmente 32 und die keilförmig entgegengerichtet angeschrägten Endbereiche 29, 30 (Aufdickungen) der Außenhäute 27, 28 der Rumpfsektionen 25, 26 eingeschoben werden. Im anschließenden Verfahrensschritt d) erfolgt dann die Verbindung der Außenhäute 27, 28 mit den Keilen 33, 34 und der Querstoßlasche 31. In den weiteren Verfahrensschritten e) bis g) wird zum Anfügen der zweiten Rumpfsektion 26 an die Querstoßlasche 31 entsprechend verfahren.

### Bezugszeichenliste

- 1: Querstoßverbindung
- 2: erste Rumpfsektion
- 3: zweite Rumpfsektion
- 4: Außenhaut (erste Rumpfsektion)
- 5: Außenhaut (zweite Rumpfsektion)
- 6: Endbereich (erste Rumpfsektion)
- 7: Endbereich (zweite Rumpfsektion)
- 8: geneigte Hautkeilfläche
- 9: geneigte Hautkeilfläche
- 10: Querstoßlasche
- 11: Unterseite (Querstoßlasche)
- 12: Querstoßlaschenkeilfläche
- 13: Querstoßlaschenkeilfläche
- 14: Keil
- 15: Keil
- 16: Verbindungselement
- 17: Verbindungselement
- 18: Pfeil (horizontal)
- 19: Pfeil (horizontal)
- 20: Pfeil (vertikal)
- 21: Pfeil (vertikal)
- 22: Pfeil (horizontal)
- 23: Querstoßlaschensegment (Querstoßlasche)
- 24: Querstoßverbindung
- 25: erste Rumpfsektion
- 26: zweite Rumpfsektion
- 27: Außenhaut (erste Rumpfsektion)
- 28: Außenhaut (zweite Rumpfsektion)
- 29: Endbereich (erste Rumpfsektion)
- 30: Endbereich (zweite Rumpfsektion)
- 31: Querstoßlasche
- 32: Querstoßlaschensegment
- 33: Keil
- 34: Keil
- 35: Spantprofil
- 36: Stützwinkel
- 37: Stützwinkel
- 38: Ausnehmung (Ringspantprofil)
- 39: Stringerkupplung
- 40: Stringerkupplung
- 41: Stringer (T-förmig)
- 42: Stringer (T-förmig)
- 43: Verbindungselement
- 44: Verbindungselement

## Patentansprüche

1. Querstoßverbindung (1, 24) zwischen zwei Rumpfsektionen (2, 3, 25, 26), insbesondere zur Schaffung einer Rumpfzelle für ein Flugzeug, mit einer Vielzahl von innenseitig auf einer Außenhaut (4, 5, 27, 28) gleichmäßig parallel zueinander beabstandet verteilt angeordneten Stringern (41, 42), **dadurch gekennzeichnet, dass** beide Endbereiche (6, 7, 29, 30) der Rumpfsektionen (2, 3, 25, 26) innenseitig entgegengesetzt geneigte Hautkeilflächen (8, 9) aufweisen und die Verbindung der beiden Endbereiche (6, 7, 29, 30) durch eine umlaufende Querstoßlasche (10, 31) erfolgt, die mit zwei entgegengesetzt geneigten Querstoßlaschenkeilflächen (12, 13) im Bereich einer Unterseite (11) versehen ist, wobei zwischen jeweils einer Querstoßlaschenkeilfläche (12, 13) und einer Hautkeilfläche (8, 9) ein Keil (14, 15, 33, 34) zum Toleranzausgleich zwischen den Rumpfsektionen (2, 3, 25, 26) einschiebbar ist.

2. Querstoßverbindung (1, 24) nach Patentanspruch 1, **dadurch gekennzeichnet, dass** ein Neigungswinkel der Hautkeilflächen (8, 9) jeweils gleich einem Neigungswinkel der Querstoßlaschenkeilflächen (12, 13) ist, wobei der Neigungswinkel der Keilflächen jedes Keils (14, 15, 33, 34) jeweils gleich dem Neigungswinkel der Hautkeilflächen (8, 9) und dem Neigungswinkel der Querstoßlaschenkeilflächen (12, 13) sind.

3. Querstoßverbindung (1, 24) nach Patentanspruch 1 oder 2, **dadurch gekennzeichnet, dass** die Hautkeilflächen (8, 9) integrale Bestandteile der Endbereiche (6, 7, 29, 30) der Rumpfsektionen (2, 3, 25, 26) sind.

4. Querstoßverbindung (1, 24) nach einem der Patentansprüche 1 bis 3, **dadurch gekennzeichnet, dass** die Querstoßlasche (10, 31) eine ringförmige Gestalt aufweist und mit mindestens zwei umlaufenden Querstoßlaschensegmenten (23, 32), insbesondere mit mindestens sechs aneinander schließenden Querstoßlaschensegmenten (23, 32), gebildet ist.

5. Querstoßverbindung (1, 24) nach einem der Patentansprüche 1 bis 4, **dadurch gekennzeichnet, dass** die mindestens zwei Querstoßlaschensegmente (23, 32) ein Spantprofil (35) aufweisen.

6. Querstoßverbindung (1, 24) nach einem der Patentansprüche 1 bis 5, **dadurch gekennzeichnet, dass** die Stringer (41, 42) jeweils mit mindestens einer Stringerkupplung (39, 40) verbunden sind.

7. Querstoßverbindung (1, 24) nach einem der Patentansprüche 1 bis 6, **dadurch gekennzeichnet, dass** die Querstoßlasche (10, 31) jeweils mit den Endbereichen (6, 7, 29, 30) der Rumpfsektionen (2, 3, 25, 26) durch Verbindungselemente (16, 17, 43, 44), insbesondere Nieten oder Schrauben, verbunden sind.

8. Querstoßverbindung (1, 24) nach einem der Patentansprüche 1 bis 7, **dadurch gekennzeichnet, dass** mindestens eine Rumpfsektion (2, 3, 25, 26) mit einem Faserverbundmaterial, insbesondere einem kohlefaserverstärkten Epoxidharz, gebildet ist.

9. Querstoßverbindung (1, 24) nach einem der Patentansprüche 1 bis 8, **dadurch gekennzeichnet, dass** mindestens eine Rumpfsektion (2, 3, 25, 26) mit einem Aluminiumlegierungsmaterial gebildet ist.

10. Verfahren zur Herstellung einer Querstoßverbindung (1, 24) zwischen zwei Rumpfsektionen (2, 3, 25, 26) mit einer Vielzahl von innenseitig auf einer Außenhaut (4, 5, 27, 28) gleichmäßig parallel zueinander beabstandet verteilt angeordneten Stringern (41, 42), insbesondere einer Querstoßverbindung (1, 24) nach einem der Patentansprüche 1 bis 9, umfassend die Schritte:
a) Zusammenfügen einer umlaufenden Querstoßlasche (10, 31) durch das Aneinanderreihen von mindestens zwei gekrümmten Querstoßlaschensegmenten (23, 32),
b) Ausrichten einer ersten Rumpfsektion (2, 25) an der Querstoßlasche (10, 31),
c) Einschieben von Keilen (14, 15, 33, 34) zum Toleranzausgleich,
d) Verbinden eines Endbereichs (6, 29) der ersten Rumpfsektion mit der Querstoßlasche (10, 31),
e) Ausrichten einer zweiten Rumpfsektion (3, 26) an der Querstoßlasche (10, 31),
f) Einschieben von Keilen (14, 15, 33, 34) zum Toleranzausgleich,
g) Verbinden eines Endbereichs (30) der zweiten anzufügenden Rumpfsektion (3, 26) mit der Querstoßlasche (10, 31).

11. Verfahren nach Patentanspruch 10, **dadurch gekennzeichnet, dass** die erste Rumpfsektion (2, 25) und die zweite Rumpfsektion (3, 26) beim Ausrichten in Bezug auf die Querstoßlasche (10, 31) vermittelt werden.

12. Verfahren nach Patentanspruch 10 oder 11, **dadurch gekennzeichnet, dass** die Stringer (41, 42) jeweils durch mindestens eine Stringerkupplung (39, 40) verbunden werden.

13. Verfahren nach einem der Patentansprüche 10 bis 12, **dadurch gekennzeichnet, dass** jeweils ein Endbereich (6, 7, 29, 30) einer Rumpfsektion (2, 3, 25, 26) mit der Querstoßlasche (10, 31) durch Verbindungselemente (16, 17, 43, 44), insbesondere durch Nieten und/oder Schrauben, verbunden wird.

14. Verfahren nach einem der Patentansprüche 10 bis 13, **dadurch gekennzeichnet, dass** die Querstoßlaschensegmente (23, 32) durch Kupplungselemente, insbesondere Verbindungslaschen, verbunden werden.

## Claims

1. Transverse butt connection (1, 24) between two fuselage sections (2, 3, 25, 26), more particularly for creating a fuselage cell for an aircraft, with a number of stringers (41, 42) arranged spaced out uniformly parallel to one another inside on an outer skin (4, 5, 27, 28), **characterised in that** the two end areas (6, 7, 29, 30) of the fuselage sections (2, 3, 25, 26) have on the inside oppositely inclined skin wedge faces (8, 9) and the connection of the two end areas (6, 7, 29, 30) is carried out by a circumferential transverse butt strap (10, 31) which is provided with two oppositely inclined transverse butt strap wedge faces (12, 13) in the underneath area (11) wherein a wedge (14, 15, 33, 34) can be pushed in between each one transverse butt strap wedge face (12, 13) and a skin wedge face (8, 9) for tolerance compensation between the fuselage sections (2, 3, 25, 26).

2. Transverse butt connection (1, 24) according to patent claim 1 **characterised in that** a slope angle of the skin wedge faces (8, 9) is each equal to a slope angle of the transverse butt strap wedge faces (12, 13) wherein the slope angle of the wedge faces of each wedge (14, 15, 33, 34) are each equal to the slope angle of the skin wedge faces (8, 9) and the slope angle of the transverse butt strap wedge faces(12, 13).

3. Transverse butt connection (1, 24) according to patent claim 1 or 2 **characterised in that** the skin wedge faces (8, 9) are integral constituent parts of the end areas (6, 7, 29, 30) of the fuselage sections (2, 3, 25, 26).

4. Transverse butt connection (1, 24) according to one of patent claims 1 to 3 **characterised in that** the transverse butt strap (10, 31) has an annular shape and is formed with at least two circumferential transverse butt strap segments (23, 32), more particularly with at least six transverse butt strap segments (23, 32) which adjoin one another.

5. Transverse butt connection (1, 24) according to one of patent claims 1 to 4 **characterised in that** the at least two transverse butt strap segments (23, 32) have a rib profile (35).

6. Transverse butt connection (1, 24) according to one of patent claims 1 to 5 **characterised in that** the stringers (41, 42) are each connected to at least one stringer coupling (39, 40).

7. Transverse butt connection (1, 24) according to one of patent claims 1 to 6 **characterised in that** the transverse butt straps (10, 31) are each connected to the end areas (6, 7, 29, 30) of the fuselage sections (2, 3, 25, 26) by connecting elements (16, 17, 43, 44), more particularly rivets or screws.

8. Transverse butt connection (1, 24) according to one of patent claims 1 to 7 **characterised in that** at least one fuselage section (2, 3, 25, 26) is formed with a fibre compound material, more particularly a carbon fibre reinforced epoxy resin.

9. Transverse butt connection (1, 24) according to one of patent claims 1 to 8 **characterised in that** at least one fuselage section (2, 3, 25, 26) is formed with an aluminium alloy material.

10. Method for manufacturing a transverse butt connection (1, 24) between two fuselage sections (2, 3, 25, 26) with a number of stringers (41, 42) arranged uniformly spaced out parallel to one another inside on an outer skin (4, 5, 27, 28), more particularly a transverse butt connection (1, 24) according to one of patent claims 1 to 9, comprising the steps:
a) assembling a circumferential transverse butt strap (10, 31) by placing at least two curved transverse butt strap segments (23, 32) alongside one another,
b) Aligning a first fuselage section (2, 25) on the transverse butt strap (10, 31),
c) Sliding in wedges (14, 15, 33, 34) for tolerance compensation,
d) Connecting an end area (6, 29) of the first fuselage section to the transverse butt strap (10, 31),
e) Aligning a second fuselage section (3, 26) on the transverse butt strap (10, 31),
f) Sliding in wedges (14, 15, 33, 34) for tolerance compensation,
g) Connecting an end area (30) of the second fuselage section (3, 26) which is to be added to the transverse butt strap (10, 31).

11. Method according to patent claim 10 **characterised in that** the first fuselage section (2, 25) and the second fuselage section (3, 26) during alignment are centred relative to the transverse butt strap (10, 31).

12. Method according to patent claim 10 or 11 **characterised in that** the stringers (41, 42) are each connected by at least one stringer coupling (39, 40).

13. Method according to one of patent claims 10 to 12 **characterised in that** each one end area (6, 7, 29,30) of a fuselage section (2, 3, 25, 26)is connected to the transverse butt strap (10, 31) by connecting elements (16, 17, 43, 44), more particularly by rivets and/or screws.

14. Method according to one of patent claims 10 to 13 **characterised in that** the transverse butt strap segments (23, 32) are connected by coupling elements, more particularly connecting plates.

## Revendications

1. Aboutement transversal (1, 24) entre deux sections de fuselage (2, 3, 25, 26), en particulier pour créer une cellule de fuselage pour un avion, comprenant une multiplicité de lisses (41, 42) régulièrement réparties du côté intérieur, parallèlement entre elles et à distance les unes des autres, sur une peau extérieure (4, 5, 27, 28), **caractérisé en ce que** deux zones d'extrémité (6, 7, 29, 30) des sections de fuselage (2, 3, 25, 26) présentent du côté intérieur des surfaces cunéiformes de peau (8, 9) inclinées en sens contraire et l'assemblage des deux zones d'extrémité (6, 7, 29, 30) s'effectue par une éclisse de raccordement transversal (10, 31) périphérique, munie de deux surfaces cunéiformes d'éclisse (12, 13), inclinées en sens contraire, dans la zone d'un côté inférieur (11), une clavette (14, 15, 33, 34) pouvant être respectivement insérée entre une surface cunéiforme d'éclisse de raccordement transversal (12, 13) et une surface cunéiforme de peau (8, 9) pour la compensation de tolérances entre les sections de fuselage (2, 3, 25, 26).

2. Aboutement transversal (1, 24) suivant la revendication 1, **caractérisé en ce qu'**un angle d'inclinaison des surfaces cunéiformes de peau (8, 9) est respectivement égal à un angle d'inclinaison des surfaces cunéiformes d'éclisse de raccordement transversal (12, 13), les angles d'inclinaison des surfaces cunéiformes de chaque clavette (14, 15, 33, 34) étant respectivement égaux à l'angle d'inclinaison des surfaces cunéiformes de peau (8, 9) et à l'angle d'inclinaison des surfaces cunéiformes d'éclisse de raccordement transversal (12, 13).

3. Aboutement transversal (1, 24) suivant la revendication 1 ou 2, **caractérisé en ce que** les surfaces cunéiformes de peau (8, 9) font partie intégrante des zones d'extrémité (6, 7, 29, 30) des sections de fuselage (2, 3, 25, 26).

4. Aboutement transversal (1, 24) suivant l'une des revendications 1 à 3, **caractérisé en ce que** l'éclisse de raccordement transversal (10, 31) présente une configuration annulaire et est formée d'au moins deux segments d'éclisse (23, 32) périphériques, en particulier d'au moins six segments d'éclisse de raccordement transversal (23, 32) se raccordant les uns aux autres.

5. Aboutement transversal (1, 24) suivant l'une des revendications 1 à 4, **caractérisé en ce que** les au moins deux segments d'éclisse de raccordement transversal (23, 32) présentent un profilé de couple (35).

6. Aboutement transversal (1, 24) suivant l'une des revendications 1 à 5, **caractérisé en ce que** les lisses (41, 42) sont respectivement assemblées par au moins un accouplement de lisses (39, 40).

7. Aboutement transversal (1, 24) suivant l'une des revendications 1 à 6, **caractérisé en ce que** l'éclisse de raccordement transversal (10, 31) est respectivement assemblée avec les zones d'extrémité (6, 7, 29, 30) des sections de fuselage (2, 3, 25, 26) par des éléments d'assemblage (16, 17, 43, 44), en particulier des rivets ou des vis.

8. Aboutement transversal (1, 24) suivant l'une des revendications 1 à 7, **caractérisé en ce qu'**au moins une section de fuselage (2, 3, 25, 26) est formée d'un matériau composite fibreux, en particulier d'une résine époxy renforcée par fibres de carbone.

9. Aboutement transversal (1, 24) suivant l'une des revendications 1 à 8, **caractérisé en ce qu'**au moins une section de fuselage (2, 3, 25, 26) est formée d'un matériau en alliage d'aluminium.

10. Procédé de fabrication d'un aboutement transversal (1, 24) entre deux sections de fuselage (2, 3, 25, 26), comprenant une multiplicité de lisses (41, 42) régulièrement réparties du côté intérieur, parallèlement entre elles et à distance les unes des autres, sur une peau extérieure (4, 5, 27, 28), en particulier d'un aboutement transversal (1, 24) suivant l'une des revendications 1 à 9, comprenant les étapes :
a) jointoiement d'une éclisse de raccordement transversal (10, 31) périphérique par la juxtaposition d'au moins deux segments cintrés (23, 32) d'éclisse de raccordement,
b) alignement d'une première section de fuselage (2, 25) sur l'éclisse de raccordement transversal (10, 31),
c) insertion de clavettes (14, 15, 33, 34) pour la compensation de tolérances,
d) assemblage d'une zone d'extrémité (6, 29) de la première section de fuselage avec l'éclisse de raccordement transversal (10, 31),
e) alignement d'une seconde section de fuselage (3, 26) sur l'éclisse de raccordement transversal (10, 31),
f) insertion de clavettes (14, 15, 33, 34) pour la compensation de tolérances,
g) assemblage d'une zone d'extrémité (30) de la seconde section de fuselage (3, 26) à raccorder avec l'éclisse de raccordement transversal (10, 31).

11. Procédé suivant la revendication 10, **caractérisé en ce que** la première section de fuselage (2, 25) et la seconde section de fuselage (3, 26) sont centrées lors de l'alignement par rapport à l'éclisse de raccordement transversal (10, 31).

12. Procédé suivant la revendication 10 ou 11, **caractérisé en ce que** les lisses (41, 42) sont respectivement assemblées par au moins un accouplement de lisses (39, 40).

13. Procédé suivant l'une des revendications 10 à 12, **caractérisé en ce qu'**une zone d'extrémité (6, 7, 29, 30) d'une section de fuselage (2, 3, 25, 26) est respectivement assemblée avec l'éclisse de raccordement transversal (10, 31) par des éléments d'assemblage (16, 17, 43, 44), en particulier par des rivets et/ou des vis.

14. Procédé suivant l'une des revendications 10 à 13, **caractérisé en ce que** les segments d'éclisse de raccordement transversal (23, 32) sont assemblés par des éléments d'accouplement, en particulier des éclisses.
